(19)

Europäisches
Patentamt
European
Patent Office
Office européen
des brevets

(11) **EP 3 484 095 A1**

(12) **EUROPEAN PATENT APPLICATION**

(43) Date of publication:
**15.05.2019 Bulletin 2019/20**

(51) Int Cl.:
*H04L 9/06* (2006.01)     *H04L 9/00* (2006.01)

(21) Application number: **17201150.4**

(22) Date of filing: **10.11.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Nagravision S.A.
1033 Cheseaux-sur-Lausanne (CH)**

(72) Inventor: **PELLETIER, Hervé
1616 Attalens (CH)**

(74) Representative: **Hoyng Rokh Monegier LLP
Rembrandt Tower, 31st Floor
Amstelplein 1
1096 HA Amsterdam (NL)**

(54) **COMPUTER-IMPLEMENTED CRYPTOGRAPHIC METHOD AND DEVICE FOR IMPLEMENTING THIS METHOD**

(57) The present invention relates to a cryptographic method based on AES algorithm, comprising:
- generating, for each round, a pair of random values ($R1_i$, $R2_i$);
- calculating, as a hidden key (K'), a result of a logical function based on an initial key (K) and the first random value of the first round ($R1_1$);
- deriving a hidden Sbox (Sbox') from of a standard Sbox of AES and one pair of random values ($R1_i$, $R2_i$);
- successively processing said rounds, each enabling to calculate a hidden subkey ($Sk_i'$), a hidden digest ($H_i'$) and a hidden state matrix ($S_i'$) in such a way that any intermediate result never reveals a standard state matrix or round key of AES;
- calculating, as output data, the result of a logical function based on the hidden state matrix of the last round ($S_N'$) and the hidden digest of the last round ($H_N'$).

Fig. 1

**Description**

**INTRODUCTION**

The present disclosure relates to the field of digital data cryptography based on Rijndael algorithm, which is a common key block encryption/decryption standard, known as the AES (Advanced Encryption Standard).

**BACKGROUND**

Nowadays, AES is widely used in any devices where confidentiality and secrecy are required. In this context, many attacks have been developed to compromise the security of this algorithm. Among these attacks, there are some types of attacks called side-channel attacks and fault attacks which aim to exploit some leakage or mathematical errors in the computation.

A side-channel attack is an attack based on information gained from the implementation of the cryptographic algorithm on an electronic device. Such an attack aims to measure physical parameters of the electronic device in order to derive values which can be helpful to find the secret key. The monitored physical parameters may refer for example to the electrical noise generated by the circuit, its temperature, the power consumption, the voltage or electromagnetic leaks.

The fault attack aims to induce faults into the implementation of the cryptographic algorithm through unexpected environmental conditions. Thus, this type of attack seeks to corrupt the implemented system by modifying physical parameters of the circuit so as to induce logical state changes and to derive information therefrom. To this end, laser spots, frequency or voltage variations are commonly used. Thus, by modifying the normal behaviour of the circuit, hackers cause errors and can extract information that can be used to reverse some sensitive data or functions hidden within the circuit. Such sensitive data may refer to cryptographic keys for instance.

It was noted that side-channel and fault attacks performed on AES block algorithm are generally focused on two critical stages which are part of this algorithm. The first critical stage is the key schedule through which all the round keys, needed later in the execution of the rounds, are derived in advance from the initial key inputted in the algorithm. The second critical stage is the non-linear step performed thanks to the substitution box in order to obscure the relationship of each byte of the blocks used in the algorithm.

In the light of these observations, some known approaches have proposed to modify the non-linear steps of the AES block algorithm so as to prevent side-channel attacks. However, such approaches remain inefficient against fault attacks. Generally speaking, the defences that may be deployed against side-channel attacks are opposed to those that may be used against fault attacks.By construction the masking/blinding approach to prevent side channel leakage complicates the operations an so they become more difficult to protect in integrity and vice versa.

Accordingly, there is a need in providing a solution able to efficiently prevent both side-channel attacks and fault attacks undertaken on the AES block algorithm, so as to overcome the deficiencies of the prior art in this field.

**SUMMARY OF THE PRESENT SOLUTION**

To address this concern, the present disclosure aims to improve the AES block algorithm so as to obtain an enhanced algorithm which is not only able to protect the confidentiality of internal data against side-channel attack, but which is further able to infect the output computation thanks to an integrity mechanism designed to prevent the fault attacks. The enhanced algorithm retains the general structure of the AES block algorithm. Accordingly, it preserves the AES coding format and remains compatible with the standard AES block algorithm.

To this end, the present solution firstly proposes a computer-implemented cryptographic method based on AES block algorithm which performs a number N of rounds i after receiving, as input data, an initial key K and at least one initial matrix (or block) of payload data. This method comprises:

- generating, for each round i, a pair of random values comprising a first random value $R1_i$ and a second random value $R2_i$;

- calculating, as a hidden key K', a result of a logical function based on the initial key K and the first random value of the first round $R1_1$;

- deriving a hidden substitution box Sbox' from of a standard substitution box of the AES block algorithm and one pair of random values $R1_i$, $R2_i$;

  - successively processing these rounds i, wherein each round i enables to calculate a hidden subkey $Sk_i'$, a

2

hidden digest $H_i'$ and a hidden state matrix $S_i'$, and wherein each calculation which involves the determination of at least one intermediate result is computed in such a way that said intermediate result never reveals a standard state matrix $S_i$ or a standard round key $Sk_i$ of the AES block algorithm;

- calculating, as output data, a result of a logical function based on the hidden state matrix of the last round $S_N'$ and the hidden digest of the last round $H_N'$.

The hidden data included in the present method are mainly used to prevent any side-channel attack. On the other hand, the digests which are part of the integrity mechanism are mainly used to prevent fault attacks. In addition, the calculation of any intermediate result within the rounds is performed in such a way that said intermediate result never produces a standard state matrix Si or a standard round key Ski of the usual AES block algorithm. It should be also noted that each round key $Sk_i$ is hidden so as to obtain a so-called hidden subkey $Sk_i'$. The hidden data are mainly obtained by including the corresponding non-hidden data in a logical operation involving at least one random value $R1_i$, $R2_i$ acting as random mask. Moreover, the hidden subkeys $Sk_i'$ are calculated on the fly during each round i.

Advantageously, in the event of any fault attack, the integrity mechanism of the present enhanced AES block algorithm allows, to infect the output data in an unsuspected manner so as to obtain a corrupted result when this algorithm is used for reversing the output data. In this regard, it should be noted that the algorithm used to encrypt is essentially the same as that used to decrypt. Since the enhanced AES block algorithm can essentially be used both as encryption algorithm and as decryption algorithm, it is referred to as a cryptographic algorithm.

Still advantageously, there is no need to use the same random values $R1_i$, $R2_i$ for the encryption stage and for the corresponding decryption stage. In other words, the random values $R1_i$, $R2_i$ generated with the present enhanced AES block algorithm do not need to be stored so as to be retrieved for reversing the output data.

Other embodiments of the solution disclosed so far, will be presented in the detailed description that will follow.

It should also be noted that the present solution is not limited to a method, but also refers to a device for implementing the method according to any of its embodiments. Other advantages and embodiments will also be disclosed in the detailed description.

## BRIEF DESCRIPTION OF THE DRAWING

The solution and the embodiments suggested in the present disclosure should be taken as non-limitative examples and will be better understood with reference to the attached figures in which:

Fig. 1 schematically depicts an overview of the present method.

Fig. 2 illustrates logical expressions of the main values or results determined in the main steps of Fig.1.

Fig. 3 provides an example of a main architecture of a device for implementing the method.

## DETAILED DESCRIPTION

The following description refers both to a method and to a device. Although these two subject-matters are presented one after the other, it should be understood that any features disclosed in connection with the method may be applied, if any, to the device for implementing this method and vice-versa.

Furthermore, the present description will refer to AES block algorithm given that the solution proposed in this disclosure is based on this algorithm. It is considered that the person skilled in the art knows AES block algorithm, especially the steps undertaken in this algorithm as well as the related specific terms and elements (such as round key, key schedule, sbox, state matrix) commonly used in this algorithm. Therefore, the present disclosure refrains from explaining in detail how AES block algorithm works.

## Overview the method

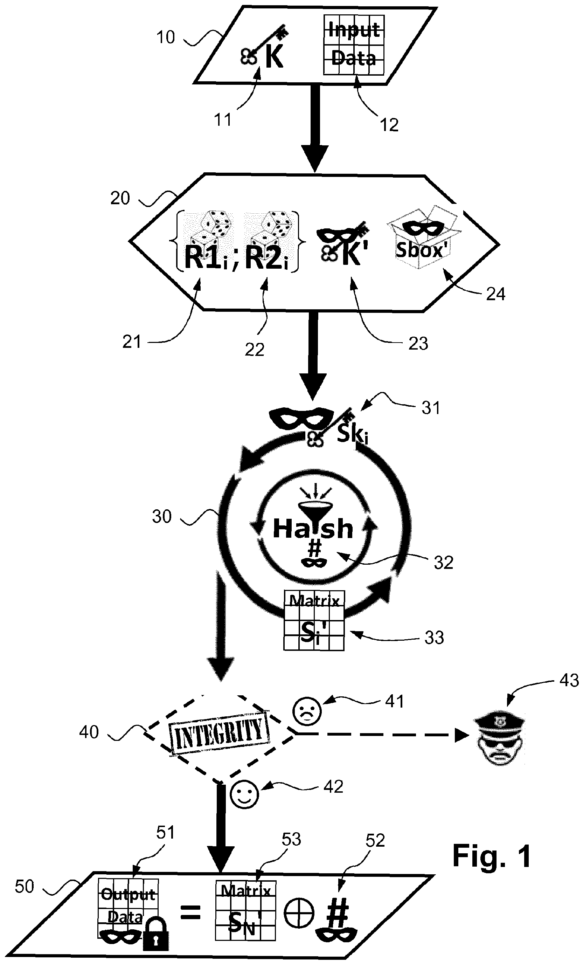

Fig. 1 schematically depicts an overview of the present method in which the main stages (or phases) of the method are depicted using graphical shape blocks comprising pictograms for representing the main steps within these stages.

First stage 10:

The first stage 10 is depicted by a parallelogram and aims to collect input data commonly required for running any cryptographic algorithm. These input data may be entered in the algorithm, either manually, e.g. via a user interface, or automatically from at least one dedicated unit which may be a memory, e.g. a secure memory, or any other intermediate unit or means.

The first input data depicted at the first stage 10 is an initial cryptographic key K having the reference numeral 11. This initial cryptographic key K is typically a secret key that may be input by the user or retrieved by a processing unit from a secure memory. According to the standard AES128 algorithm, the initial cryptographic key K is 128 bits length. It may be longer in case of AES192 or AES256 algorithm for example. According to AES128, the initial key K may be represented by a square matrix of 4x4 bytes. Each bytes comprising 8 bits, therefore such a matrix comprises 4x4x8=128 bits. In the present disclosure, the case of AES128 will be taken as a non-limiting example to explain the present solution. However, the present solution remains fully compatible with the standard AES block algorithm regardless the usual key length.

The second input data depicted at the first stage 10 is denoted by the reference numeral 12. According to the standard AES block algorithm, input data 12 is typically represented in the form of a data block, more specifically a byte matrix. The size of this byte matrix is always 4x4 matrix whatever AES key length. The round number is affected by the key length.

Input data 12 may correspond to a part of a plaintext P to be encrypted in to a cipher text C. Since the plaintext P generally comprises more data than that of a byte matrix, such a plaintext P is typically split in several blocks, each of them may be regarded as input data 12 successively processed by the algorithm. For the sake of simplicity, one will consider a single block as input data 12 to be processed in the algorithm. In addition, it should be noted that the same algorithm can be applied to encrypt a plaintext P or to decrypt a cipher text C. For this reason, the text (P or C) to be processed by the algorithm is referred as "input data" 12 and the corresponding text provided by the algorithm will be referred as "output data". For the same reason, the present method is referred as cryptographic method so as to cover both an encryption method and a decryption method.

Second stage 20:

The second stage 20 of the method is depicted by an hexagon and aims to prepare some data which will then be used in the algorithm. Among these data, this second stage 20 shows a pair of random values $R1_i$, $R2_i$, a hidden substitution box Sbox' and a hidden key K'. As a general rule, in the present description the index i refers to the number of the current round i of the algorithm, and the single quote «'» assigned to any value is used to indicate that this value is a hidden value. Hidden data can be regarded as data that cannot be found or replicated in the standard AES block algorithm. For example, a hidden matrix may be obtained by using a standard matrix as operand in a logical function so as to obtain as result a new matrix which has the same format as the standard matrix, but which comprises different values with respect to the standard matrix.

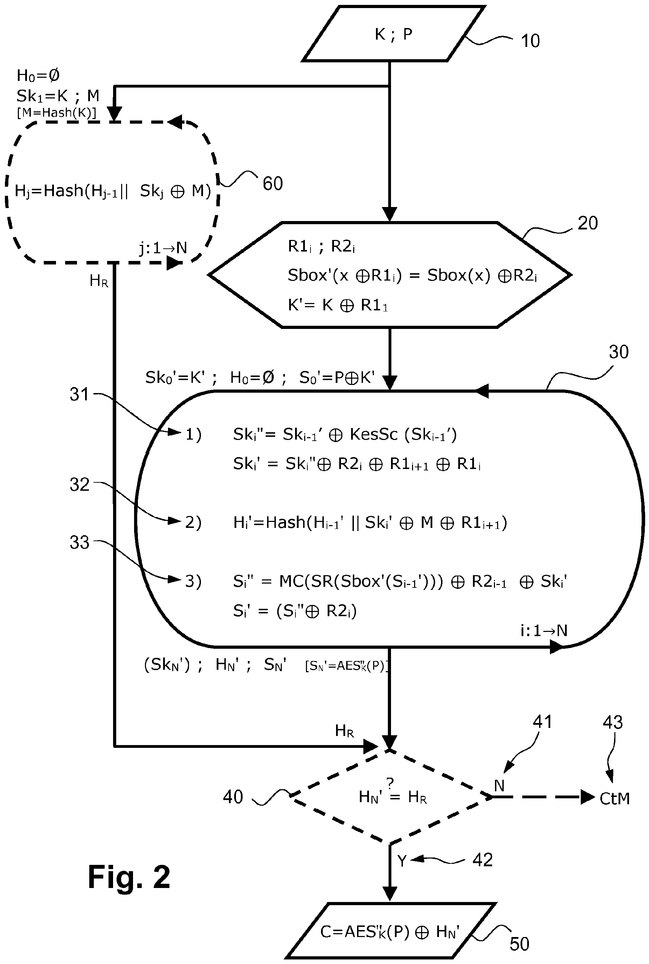

The pair of random values comprises a first random value $R1_i$ and a second random value $R2_i$ which may be generated by at least one random generator. The first and second random values are respectively also referred as reference numerals 21, 22 in Fig. 1. One pair of random value $R1_i$, $R2_i$ is generated for each round i of the algorithm. Accordingly, if the algorithm is based on N rounds, for example N=10 rounds, there will be N pairs of random values, namely 10 pairs in this example. As it will be shown more thoroughly in connection with Fig. 2, the random values $R1_i$, $R2_i$ will be mainly used to hidden standard data, so as to obtain the so-called hidden data. In this regard, it should be noted that the standard AES block algorithm comprises neither random values, nor data hidden using random values.

According to the preferred embodiment, the pairs of random values $R1_i$, $R2_i$ are all generated in advance, more specifically before starting the rounds i of the algorithm. Once generated, each random value, or pair of random values, may be stored in a memory, e.g. within a record. The records may be identified by a number or may be stored in an orderly manner. Alternatively, these random values may be generated on the fly during the rounds and some of these random values may be generated slightly in advance and stored as long as they are still to be used. However, none of these random values $R1_i$, $R2_i$ needs to be stored for reversing the output data provided by the present solution. In other words, the random values used to decrypt a cipher text C so as to obtain a plaintext P do not need to be the same random values as that used to obtain the cipher text C from a plaintext P. Indeed, according to the present method the output data are advantageously independent from the random values $R1_i$, $R2_i$.

The hidden key K' obtained at the second stage 20 is referred as reference numeral 23 in Fig. 1. The hidden key K' is derived from the initial cryptographic key K. To this end, it may be obtained by using a logical function, a hash function or a combination of several functions. Any of these functions may further involve another random value or another data. Preferably, the hidden key K' is obtained by XOr-ing the initial cryptographic key K with the first random value of the first round $R1_1$.

The hidden substitution box Sbox' is referred as reference numeral 24 in Fig. 1. The hidden substitution box Sbox' is obtained on the basis of the standard substitution box Sbox (i.e. the Sbox of the standard AES block algorithm) and the random values $R1_i$, $R2_i$. Details on how obtaining the hidden substitution box Sbox' will be provided in connection with Fig. 2.

According to the embodiment shown both in Fig. 1 and Fig. 2, the hidden substitution box Sbox' is determined only once during the second stage 20 of the algorithm. However, it should be noted that a new substitution box Sbox' may be used at each round i instead of using a single hidden Sbox' for all rounds i.

Third stage 30:

The third stage 30 of the present method is depicted by a circular shape because it refers to a round i which is repeated N times, depending on the key length of the initial cryptographic key K. For an initial cryptographic key K of 128, 192 or 256 bit length, the AES block algorithm requires respectively 10, 12 or 14 usual rounds i.

Each round of the standard AES block algorithm aims to determine a new round key $Sk_i$ and a new state matrix $S_i$. According to the method proposed by the present solution, each round i further aims to determine a so-called hidden subkey $Sk_i'$, a hidden digest ($H_i'$) and a hidden state matrix $S_i'$. These hidden data have respectively the reference numeral 31, 32, and 33 in Fig. 1.

The hidden subkey $Sk_i'$ and the hidden state matrix $S_i'$ are designed to be used instead of the standard round key and the standard state matrix respectively. Nevertheless, in the present solution, the round key and the state matrix are still calculated in the same way as standard AES at each round i, but using hidden data instead of standard data of AES. For this reason, the method of the present solution will respectively refer to a so-called pseudo-standard round key $Sk_i''$ and a pseudo-standard state matrix $S_i''$.

The determination of the hidden subkeys $Sk_i'$ can be regarded as a key schedule operation similar to that performed by the standard AES block algorithm when determining the round keys. However, instead of determining all the round keys at once, as made by the standard AES block algorithm, the hidden subkeys $Sk_i'$ of the present method are determined one after the others during the third stage 30 , so that one hidden subkey $Sk_i'$ is determined at each round i.

The calculation at each round i of the hidden subkey $Sk_i'$, the hidden digest $H_i'$ and the hidden state matrix $S_i'$ requires for each of these hidden data the determination of at least one intermediate result. According to the present method, the aforementioned intermediate result never reveals a standard state matrix $S_i$ or a standard round key $Sk_i$ of the standard AES block algorithm. Such a feature can be achieved by using the operands, of commutative logical expressions or operations, in a specific order, as explained in the following example.

Let's consider the operands A, B and C of the following logical operation using XOr operators: $A \oplus B \oplus C$. Since this logical operation is commutative, it may be noted that $C \oplus A \oplus B$ or $B \oplus C \oplus A$ will provide the same result. However, since the present method is a computer-implemented method, the processor will always compute the result by processing the operand in the same order regardless if the operand is A, B or C.

In the above first expression: $A \oplus B \oplus C$, one can consider that the processor will firstly compute $A \oplus B$, so as to obtain a first intermediate result IR1, and then it will compute $IR1 \oplus C$ in order to obtain the final result.

In the above second expression: $C \oplus A \oplus B$, the processor will firstly compute $C \oplus A$, so as to obtain a first intermediate result IR1a, and then it will compute $IR1a \oplus B$ in order to obtain the final result.

Even if the final results are the same in both cases, the first intermediate results IR1 and IR1a are different. Therefore, in some cases it may happen that one of these intermediate results corresponds to a sensitive value of the standard AES block algorithm. Such a sensitive value may typically be a standard state matrix $S_i$ or a standard round key $Sk_i$. In order to prevent any standard state matrix $S_i$ or standard round key $Sk_i$ from being revealed by an intermediate result, each intermediate result is determined in a specific way, especially when the operation involves at least three operands (i.e. at least two operators).

The hidden digest is a specific feature of the present solution since no digest is determined according to the standard AES block algorithm. The hidden digest is obtained using a hash function which is, among others, applied on the hidden subkey $Sk_i'$ of the current round I while taking into account the previous hidden digest obtained at the previous round: the hash is applied on subkey masked by a constant mask M, the dynamic mask is cleared with xor operation $Sk_i' \oplus M \oplus R1_{i+1}$. The hidden digest is calculated for integrity purposes and will contribute to detect any fault attack.

The calculation of the hidden state matrix Si' at each round corresponds to the non-linear step of the standard AES block algorithm given that this calculation involves the hidden substitution box Sbox'. This hidden substitution box aims to apply confusion in the hidden state matrix in order to obscure the relationship of each byte within the matrix.

Optional stage 40:

The next stage 40 is optional in the method of the present solution. For this reason, it has been depicted by a diamond (rhombus) using a dash line both in Fig.1 and in Fig. 2. This stage 40 aims to perform an integrity test by comparing the hidden digest obtained during the last round with a reference value which does not need to be determined during the rounds I but which may be determined in advance and may then be used as a reference constant. The reference value can be regarded as a reference digest which is determined, among others, on the basis of the initial cryptographic key K. Preferably, the reference digest and the initial cryptographic key K have the same lifetime.

If the result of the integrity test provides a negative outcome, as shown by the pictogram 41 that is not happy, a countermeasure 43 may be undertaken. On the other hand, if the integrity test provides a positive outcome, as shown by the pictogram 42 that is happy, no countermeasure 43 will be undertaken and the output data can be calculated.

Several kinds of countermeasures 43 may be undertaken. For example, a countermeasure 43 may aim to stop immediately the method or to stop it before calculating the output data. Alternatively, one can increment a counter each time a negative outcome is provided by the integrity test and a countermeasure 43 may be undertaken once the value of the counter reaches a predefined threshold. It also means that there is no requirement to execute a countermeasure each time a negative outcome is provided by the integrity test. For example, in case of negative outcome such an event can be logged in a logfile pending a further action as countermeasure.

Last stage 50:

The last stage 50 of the present method is also depicted by a parallelogram and aims to provide, as output data, the result of a logical function based on the hidden state matrix of the last round and the hidden digest of the last round having respectively the reference numerals 53 and 52 in Fig. 1. The result of this logical function is a so-called hidden output data 51 which is different from the output data provided by the standard AES block algorithm due to the aforementioned logical function which involves the hidden state matrix of the last round 53. As shown in Fig. 1, the logical operation is preferably based on logical XOr operator. This operation allows to include an integrity mark in the final output data by mixing the hidden state matrix of the last round 53 with the hidden digest of the last round 52

In the event of a fault attack, at least one hidden digest is altered during the rounds computation. Therefore, the hidden output data 51 is also altered given that it is computed on the basis of the hidden digest of the last round 52 and given that this digest has been determined so as to depend on each hidden digest of the previous rounds. If one considers that the present method is used to encrypt a plaintext P, the hidden output data 51 may be regarded as the cipher result provided by the present method. Since this result is an encrypted result, there is no possibility to distinguish this result from that provided by using the standard AES block algorithm because both are under an encrypted form and have the same format.

In case of fault attack, an error may be caused for example during the key schedule or the substitution box calculation. Thanks to the present method, no information will be deduced on the key properties because the same substitution boxes are used both for the key schedule operation and the non-linear step of the algorithm. Thanks to the final logical operation carried out at the last stage 50, any error effect caused by a fault attack is advantageously masked and thus annihilated.

**Detailed steps of the method**

Fig. 2 illustrates the same method as that shown in Fig. 1, but using logical expressions instead of the pictograms so as to provide more details regarding the steps performed in some stages. Accordingly, only these steps will be discussed hereinafter.

Derivation of the Sbox' (second stage 20):

Referring to the second stage 20, the expression $Sbox'(x \oplus R1_i) = Sbox(x) \oplus R2_i$ shows the relationship between the hidden substitution box Sbox' of the present method and the standard substitution box Sbox of the standard AES block algorithm. As a reminder, the Sbox can be regarded as a substitution table which takes an input byte and transforms it into an output byte which is different from the input byte. The standard substitution box Sbox is defined by the standard AES block algorithm as a fixed table which never varies. The variable x is a value which varies from 0 to 255. This variable x may also be regarded as an index defining a line number of the table. To each variable x, there is corresponding value or result denoted Sbox(x) according to the standard AES block algorithm.

According to the above expression, the hidden substitution box Sbox' is calculated by performing the following steps. These steps are repeated for each variable x of the standard Sbox, so as to obtain a new variable and a new corresponding value, both of them pertaining to the hidden substitution box Sbox' of the present method.

The first step aims to calculate the result of $Sbox(x) \oplus R2_i$. For example, if x=0 (first of the 256 values) and Sbox(0) = 12 according to the standard substitution box, therefore the above result will be equal to: $12 \oplus R2_i$, where $R2_i$ is the second random value of the current round i.

The next step aims to calculate the new variable which have to provide, as result, $Sbox(x) \oplus R2_i$ when it is processed using the new table. This new variable is obtained by calculating: $x \oplus R1_i$, where $R1_i$ is the first random number of the current round i.

From the above two steps, the new substitution table can be gradually built by writing that the input byte having a value equal to $x \oplus R1_i$ has to transformed in an output byte having a value equal to $Sbox(x) \oplus R2_i$.

Generally speaking, the hidden substitution box Sbox' has a same format as that of the standard substitution box Sbox and the hidden substitution box Sbox' is obtained by processing each input value x of the standard substitution box Sbox as follows:

- calculating a first result by performing a first logical operation using the input value x of said standard substitution box Sbox and the first random value of the current round $R1_i$ as operands;

- storing the above first result as an input value x' of the hidden substitution box Sbox';

- determining the output value y provided by the standard substitution box Sbox for the aforementioned input value x of the standard substitution box Sbox;

- calculating a second result by performing a second logical operation using the above output value y provided by the standard substitution box Sbox and the second random value of the current round $R2_i$ as operands;

- storing this second result as an output value y' of the hidden substitution box Sbox'.

Calculation of K' (second stage 20):

The second stage 20 is also used to calculate the hidden key K'. This calculation is simpler because it is obtained by the following logical expression: $K' = K \oplus R1_1$, where K is the initial cryptographic key and $R1_1$ is the first random value of the first round i=1.

Previous data of the first round (third stage 30):

The third stage 30 requires as starting data for the first round i=1: the hidden subkey of the previous round $Sk_{i-1}'$, the hidden digest of the previous round $H_{i-1}'$ and the hidden state matrix of the previous round $S_{i-1}'$, so as to be able to respectively execute the steps 1), 2) and 3) shown at stage 30 in Fig. 2. These three steps intend to respectively calculate, for the current round i, the hidden subkey $Sk_i'$, the hidden digest $H_i'$ and the hidden state matrix $S_i'$.

For the first round i=1, the previous data are defined as follows:

The previous hidden subkey $Sk_0'$ is the hidden key K' calculated at the second stage 20, the previous hidden digest $H_0$ is an empty set whose common notation is $\varnothing$, and the previous hidden state matrix $S_0'$ is equal to the Xor logical operation using the input data 12 (i.e. the byte matrix P) and the hidden key K' as operands. Accordingly, the following expressions are noted as input value of the round stage 30: $Sk_0' = K'$ ; $H_0' = \varnothing$ ; $S_0' = P \oplus K'$.

Calculation of the hidden subkey $Sk_i'$ (third stage 30):

The hidden subkeys $Sk_i'$ of the present method are not calculated all together during a key schedule stage performed before the rounds in accordance with the standard AES block algorithm, but they are calculated on the fly during the rounds. As illustrated in Fig. 2, the calculation of each hidden subkey $Sk_i'$ will be better understood through the execution of two mains steps:

The first main step aims to determine the pseudo-standard round key $Sk_i''$ which is obtained in the same way as for obtaining a standard round key $Sk_i$, namely by using the standard AES block algorithm but with the hidden data of the present method instead of the corresponding standard values of AES.

Accordingly, the pseudo-standard round key is obtained by the following expression: $Sk_i'' = Sk_{i-1}' \oplus KesSc(Sk_{i-1}')$, where $KesSc(Sk_{i-1}')$ is the standard key schedule function of AES applied on the previous hidden subkey $Sk_{i-1}'$. This key schedule function corresponds to the following expression: $KesSc(Sk_{i-1}') = Sbox'\{ RW[Sk_{i-1}'(:,end)] \} \oplus Constant \oplus Sk_{i-1}'(:,1\text{-}end)$, where:

$Sk_{i-1}'(:,end)$ designates the last column (i.e. the elements of the $4^{th}$ column for AES128) of the previous hidden subkey $Sk_{i-1}'$;
$Sk_{i-1}'(:,1\text{-}end)$ successively designates all the columns of the previous hidden subkey $Sk_{i-1}'$ while successively processing each column in an ordered manner from the first to the last column;
RW[...] designates the rotational operation performed on the elements of the last column in question; where the top element of this column takes the place of the last element of this same column while shifting the other elements (i.e. the 2nd, 3rd and 4th element in AES128) to the top;

Sbox' {...} designates the application of the hidden substitution box Sbox' to the value corresponding to the expression between the signs {}; and

"Constant" designates the standard constant value used during a round of the standard AES block algorithm.

The pseudo-standard round key $Sk_i''$ can be regarded as an intermediate result obtained at the end of the first main step.

The second main step aims to determine the hidden subkey $Sk_i'$ using the aforementioned intermediate result and random values in accordance to the following expression: $Sk_i'=Sk_i'\oplus R2_i\oplus R1_{i+1}\oplus R1_i$. To this end, the following sub-steps are carried out in the following order:

Firstly, a first intermediate result is obtained by the expression: $Sk_i''\oplus R2_i$.

Then, a second intermediate result is obtained by XOr-ing the first intermediate result with the first random value of the next round $R1_{i+1}$.

Finally, the hidden subkey $Sk_i'$ is obtained by XOr-ing the second intermediate result with the first random value of the current round $R1_i$.

Thanks to this specific order, the intermediate results never reveal a standard round key $Sk_i$ of the standard AES block algorithm.

To summarize, from a strictly mathematical view, for any round i the hidden subkey $Sk_i'$ is equal to the following expression: $Sk_i' = Sk_i \oplus R1_{i+1}$, so that the sensitive standard round key $Sk_i$ is continually masked. On the other hand, since one of the goals of the present solution is to avoid using sensitive standard variable such as round keys $Sk_i$, the above expression providing the hidden subkeys $Sk_i'$ is not used in such a formula, even if this formula is shorter. Such an approach is part of the specific features of the present solution.

Generally speaking, one can note that the hidden subkey ($Sk_i'$) is the result of a logical expression calculated by successively processing, as ordered operands, the pseudo-standard round key $Sk_i''$ calculated in accordance with the AES block algorithm using the hidden subkey of the previous round $Sk_{i-1}'$, the second random value of the current round $R2_i$, the first random value of the next round $R1_{i+1}$ and the first random value of the current round $R1_i$. Preferably, the operators used in this logical expression are XOr logical operators.

Calculation of the hidden digest $H_i'$ (third stage 30):

In the present method, a hidden digest $H_i'$ is determined as an integrity value during each round i in accordance with the following expression:

$H_i'=Hash(H_{i-1}' \| Sk_i' \oplus M \oplus R1_{i-1})$, where:

Hash(...) designates a hash function (i.e. a one-way function) applied on the value corresponding to the expression between the parentheses ( );

$H_{i-1}'$ designates the previous hidden digest with respect to the current round i; and

the sign $\|$ designates a concatenation operation performed on the values corresponding to the expressions located on both sides of this sign.

The calculation of the hidden digest $H_i'$ of the current round i is done in accordance with the following sub-steps:

Firstly, a first intermediate result is obtained by the expression: $Sk_i' \oplus M$ where M is a secret constant whose size is equal to the size of the initial cryptographic key K. The secret constant M acts as a mask and may be a random value. Preferably, the secret constant M is the result of a hash function applied on the initial cryptographic key K so that H=Hash(K) for instance. Such a secret constant M may be obtained e.g. as soon as the initial cryptographic key K is entered in the algorithm at the first stage 10.

Then, a second intermediate result is obtained by XOr-ing the above first intermediate result with the first random value of the next round $R1_{i+1}$.

Then, the concatenation operation is performed on the previous hidden digest $H_{i-1}'$ and the above second intermediate result so as to obtain a third intermediate result.

Finally, the hidden digest $H_i'$ is obtained by applying a hash function on the above third result.

Generally speaking, the hidden digest $H_i'$ is obtained by applying a hash function on a value determined from a logical expression calculated by successively processing, as ordered operands, the hidden subkey $Sk_i'$, the secret constant M and the first random value of the next round $R1_{i+1}$, and from the hidden digest of the previous round $H_{i-1}'$ if the current round i is not the first round. Preferably, the operators used in this logical expression are XOr logical operators.

Calculation of the hidden state matrix $S_i'$ (third stage 30):

As shown in Fig. 2, the calculation of each hidden state matrix $S_i'$ will also be better understood through the execution of the following two mains steps:

The first main step aims to determine a pseudo-standard state matrix $S_i''$ which is obtained in the same way as for obtaining a standard state matrix $S_i$, namely using the standard AES block algorithm but with the hidden data of the present method instead of the corresponding standard values of AES.

Accordingly, the pseudo-standard state matrix is obtained by the following expression: $S_i'' = MC(SR(Sbox'(S_{i-1}'))) \oplus R2_{i-1} \oplus Sk_i'$ where:

SR(...) designates the standard Shift Rows operation applied on the matrix which corresponds to the expression between the parentheses ( );
MC (...) designates the standard Mix Columns operation applied on the matrix which corresponds to the expression between the parentheses ( ).

Since both the SR and MC operations are also well known for the skilled person in the art, they will not be further detailed in the present disclosure.

The pseudo-standard state matrix $S_i''$ of the current round i is obtained in accordance with the following sub-steps:

Firstly, a first intermediate result is obtained by the expression:

MC(SR(Sbox'($S_{i-1}'$))) which firstly requires to determine the hidden Sbox' and then the result of the SR operation. It should be noted that, in accordance with the standard AES block algorithm, the mix column MC operation is skipped in the last round N, because the diffusion provided by this MC operation would not go to the next round.

Then a second intermediate result is determined by XOr-ing the above first intermediate result with the second random value of the previous round $R2_{i-1}$.

Finally, the pseudo-standard state matrix $S_i''$ is obtained by XOr-ing the above second intermediate result with the hidden subkey of the current round $Sk_i'$.

The second main step allows to obtain the hidden state matrix $S_i'$ by XOr-ing the hidden subkey of the current round $Sk_i'$ with the second random value of the current round $R2_i$.

To summarize, from a strictly mathematical view, for any round i, the hidden state matrix $S_i'$ is equal to the following expression: $S_i' = S_i \oplus R1_{i+1}$, so that the sensitive standard state matrix $S_i$ is continually masked. On the other hand, since one of the goals of the present solution is to avoid using sensitive standard variable such as standard state matrices $S_i$, the above expression providing the hidden state matrices $S_i'$ is voluntarily not used in such a formula, even if this formula is shorter. Such an approach is part of the specific features of the present solution.

Generally speaking, the hidden state matrix $S_i'$ is the result of a logical expression calculated by successively processing, as ordered operands, the pseudo-standard state matrix $S_i''$ calculated in accordance with the AES block algorithm using the hidden state matrix of the previous round $S_{i-1}'$, the second random value of the previous round $R2_{i-1}$, the hidden subkey of the current round $Ski'$ and the second random value of the current round $R2_i$. Preferably, the operators used in this logical expression are XOr logical operators.

Output data of the round stage (third stage 30):

The computation of the hidden data $Sk_i'$, $H_i'$ and $S_i'$, determined under the reference numeral 31, 32, and 33 of Fig. 2, is repeated in an iterative manner through the successive rounds, until all the N rounds have been processed. At the end of the N rounds, the following data are available: the hidden digest of the last round $H_N$, the hidden state matrix (Fig. 2 of the last round $S_N'$ and the hidden subkey of the last round $Sk_N'$. The last hidden state matrix $S_N'$ can be regarded as being the output or result provided by a pseudo-standard AES block algorithm: $S_N' = AES_K''(P)$. It should be noted that, similar to the standard AES block algorithm, the calculation of the hidden state matrix $S_i'$ at the last round is slightly different from that of the other rounds, because the mix column MC operation is merely skipped when determining the last pseudo-standard state matrix $S_N''$. Accordingly, if the algorithm is based e.g. on N=10 rounds, the last hidden state matrix $S_{10}'$ issued at the end of the last round i=10 may be determined by firstly calculating the last pseudo-standard state matrix: $S_{10}$" = SR(Sbox'($S_9$')) $\oplus$ R2$_9$ $\oplus$ Sk$_{10}$'; then by calculating the last hidden state matrix:

$$S_{10}'=S_{10}" \oplus R2_9;$$

namely:

$$S_{10}' = SR(Sbox'(S_9')) \oplus R2_9 \oplus Sk_{10}' \oplus R2_9$$

and therefore:

$$S_{10}' = SR(Sbox'(S_9')) \oplus Sk_{10}'.$$

According to the standard AES block algorithm, the last state matrix is directly obtained from the formula: $S_{10} =$ SR(Sbox($S_9$)) $\oplus$ Sk$_{10}$.

Since the hidden values $S_9$' et Sk$_{10}$' of the present solution are issued from standard values ($S_9$ and Sk$_{10}$ respectively) which are each hidden by the same random value: R1$_{11}$ (if N=10); therefore the hidden state matrix $S_{10}$' does not differ from the standard state matrix $S_{10}$. Indeed, according to known mathematical properties: R1$_{11}$$\oplus$ R1$_{11}$ =0 and A$\oplus$0=A, so that the random value R1$_{11}$ finally disappears from a mathematical point of view. In addition, since the last pseudo-standard state matrix $S_{10}$' can be obtained by the formula: $S_{10}'$= SR(Sbox'($S_9$')) $\oplus$ Sk$_{10}$', it should be noted that, in the last round (i=10), there is no need to calculate $S_{10}$' using the formula: $S_i'=(S_i"\oplus R2_i)$ shown in the last step 3) of stage 30 in Fig. 2.

Optional integrity test (fourth stage 40):

The fourth stage 40 is optional and mainly aims to compare the last hidden digest H$_N$' with a reference digest H$_R$ which can be regarded as a pre-computed integrity pattern associated to the initial cryptographic key K. If this test provides a positive outcome 42, the last stage 50 can be executed without any further condition. However, if the test provides a negative outcome 41, a countermeasure CtM 43 may be undertaken as already explained in connection with the overview of the method.

To perform the integrity test, the reference digest H$_R$ must first be determined. This is achieved in the optional stage 60 shown in Fig. 2 and explained hereinafter.

As illustrated in Fig. 2, the reference digest H$_R$ is also determined in an iterative way through a number of iterations j which is also equal to N. More specifically the reference digest is determined by the following expression: H$_j$=Hash(H$_{j-1}$ $\|$ Sk$_j$ $\oplus$ M) where H$_{j-1}$ is the digest obtained at the previous iteration j-1 and Sk$_j$ is the standard round key of the standard AES block algorithm for the current iteration j.

The optional stage 60 requires as starting data for the first iteration j=1: the previous digest H$_0$ which is an empty set $\varnothing$, the first round key Sk1 which is the main cryptographic key K and the secret constant M already disclosed previously. Accordingly, the following expressions are noted as input value of the optional iterative stage 60: Sk$_1$=K ; H$_0$=$\varnothing$ and M=Hash(K) according to the preferred embodiment. Once the N iterations j have been processed, the last digest obtained by this optional stage is the reference digest H$_R$.

Generally speaking, the first digest H$_1$ is obtained by applying a hash function on a result of a logical operation using, as operands, the standard round key Sk$_1$ of a first round of the AES block algorithm and the secret constant M. The digests of the next iterations are each obtained by applying the hash function on a concatenation of the previous digest H$_{j-1}$ and a result of a logical operation using, as operands, the standard round key Sk$_i$ of the current round of the AES block algorithm and the secret constant M.

The optional stage 60 may be performed e.g. once the initial cryptographic key K has been entered in the algorithm as shown in Fig. 2. It should be noted that the reference digest H$_R$ is obtained in a way which is similar to that used for obtaining the last hidden digest H$_N$'. The difference between these two ways is that the hidden digest is calculated on the basis of a hidden subkey Ski' and a random value R1i+1, whereas the reference digest is only determined on the basis of standard data (Sk$_j$ and M) commonly used by the standard AES block algorithm. Advantageously, this means that the reference digest can be determined in an independent way, more specifically in a way which is fully separate from the last hidden digest H$_N$'.

Final output data (fifth stage 50):

The final computation aims to calculate the hidden output data which, in the example of Fig. 2, is denoted by the letter C in reference to the Cyphertext provided by the present algorithm from the plaintext P and the initial cryptographic key K. The hidden output data is calculated according to the following expression: $C=S_N'\oplus H_N'$, or in other words:

$$C=AES_K''(P)\oplus H_N'.$$

If an error occurs during the operations performed on the key schedule or the hidden substitution box Sbox', the key properties remain advantageously masked because the same hidden substitution boxes Sbox' are used both for determining the hidden subkeys $Sk_i'$ and the hidden state matrices $S_i'$, and the final XOr operation carried out at stage 50 masks any error effect.

For example, if a fault attack is done on the Sbox', the latter will become an erroneous hidden substitution box: $Sbox'_{Fault}$ and the method will compute wrong hidden subkeys $Sk_i'_{Fault}$ and finally bad hidden digests $H_{iFault}$. As output data, the method will provide $C_{Fault}=AES_K''(P)_{Fault}\oplus H_N'_{Fault}$ where both $AES_K''(P)_{Fault}$ and $H_N'_{Fault}$ advantageously remain unknown to the attacker.

Additional embodiments:

According to one embodiment, the derivation of the hidden substitution box Sbox' is performed during each round i. Therefore, instead of determined only one hidden substitution box Sbox' to be used for the entire present method, a new hidden substitution box Sbox' may be determined at each round i of the third stage 30.

According to another embodiment, each random value $R1_i$, $R2_i$ is one-byte length. By simplification R1i and R2i (for i th round number) are byte value. R1i and R2i are applied (xored) on each byte of State Matrix, Hash value.....

According to a further embodiment, at least one of the logical expressions, operations and functions comprises exclusive OR operator(s).

It should also be noted that since some previous or next values, e.g. $Sk_{i-1}'$, $H_{i-1}$, $H_{j-1}$, $S_{i-1}'$, $R2_{i-1}$ or $R1_{i+1}$, must be processed in the current rounds i or iteration j, these values are stored at least temporarily until they are no longer needed.

Advantageously, all the sensitive data of the standard AES block algorithm, such as round keys and state matrix, are continually hidden thanks to the present method.

**Reversing the output data provided by the present method**

In Fig. 2, the output data is noted $C=AES_K''(P)\oplus H_N'$. In this example, C designates the cipher text provided as result by the present method using a plaintext P as input data. When reversing C, the present method is used to calculate the recursive hidden digest $H_N'$. To this end, one can use C and K as input data of the present method in order to retrieve the secret constant M associated to the initial cryptographic key K and to compute the recursive hidden digest $H_N'$. Then, one can compute, as an intermediate result, $C\oplus H_N'$ before reversing this intermediate result using the standard AES block algorithm so as to obtain the confidential output data P: $P=AES_K^{-1}(C\oplus H_N')$. Accordingly, the same digest $H_N'$ being used in the calculation of C and P.

**Device for implementing the method of the present solution**

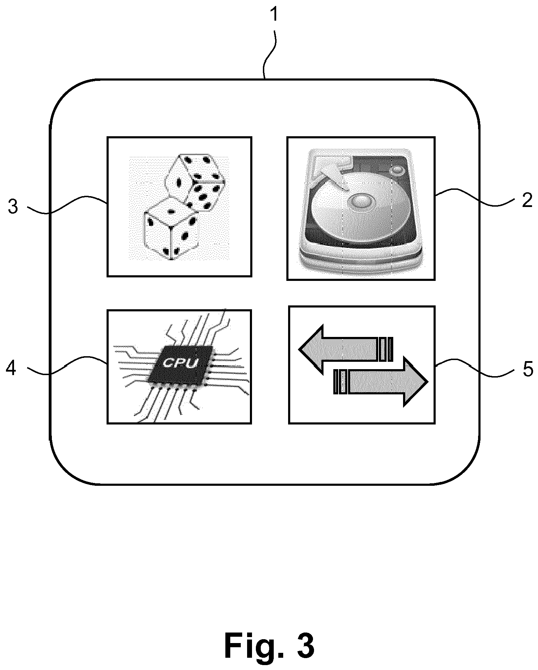

Fig. 3 provides an example of a main architecture of a device 1 for implementing the above method of the present solution, whatever the embodiment of this method. The device 1 may be a computer, a smartcard, a chipset or any computing unit able to implement the above described cryptographic method.

To this end, the device 1 comprises:

- at least one memory 2 configured to store at least any data required to ensure the implementation of the method of the present solution,

- at least one random generator 3 configured to generate at least a part of the random values required by the aforementioned method,

- a processing unit 4 configured to enable the execution of this method by managing the data exchanged with any component of the device 1 in accordance with programming steps, and

- a data interface 5 configured to exchange data with at least the processing unit 4. Accordingly, the data interface 5 may be also used to exchange data with a component external to the device 1.

In one embodiment, the memory may be a secure memory. According to another embodiment, the device 1 may be a monolithic device.

**Final considerations**

Although an overview of the inventive subject matter has been described with reference to specific example embodiments, various modifications and changes may be made to these embodiments without departing from the broader spirit and scope of embodiments of the present invention. For example, various embodiments or features thereof may be mixed and matched or made optional by a person of ordinary skill in the art. The Detailed Description, therefore, is not to be taken in a limiting sense, and the scope of various embodiments is defined only by the appended claims, along with the full range of equivalents to which such claims are entitled.

**Claims**

1. A computer-implemented cryptographic method based on an Advanced Encryption Standard (AES) block algorithm performing a number (N) of rounds (i) after receiving, as input data (11, 12), an initial cryptographic key (K) and at least one initial matrix of payload data (12), comprising:

   - generating, for each round (i), a pair of random values ($R1_i$, $R2_i$) comprising a first random value ($R1_i$) and a second random value ($R2_i$);
   - calculating, as a hidden key (K'), a result of a logical function based on the initial cryptographic key (K) and the first random value of the first round ($R1_1$);
   - deriving a hidden Sbox (Sbox') from of a standard Sbox of the AES block algorithm and one pair of random values ($R1_i$, $R2_i$);
   - successively processing said rounds (i), each round (i) enabling to calculate a hidden subkey ($Sk_i'$), a hidden digest ($H_i'$) and a hidden state matrix ($S_i'$), and wherein each calculation which involves the determination of at least one intermediate result is computed in such a way that said intermediate result never reveals a standard state matrix ($S_i$) or a standard round key ($Sk_i$) of the AES block algorithm;
   - calculating, as output data (51), a result of a logical function based on the hidden state matrix of the last round ($S_N'$) and the hidden digest of the last round ($H_N'$).

2. The method of claim 1, wherein the derivation of said hidden Sbox (Sbox') is performed during each round (i).

3. The method of claim 1 or 2, further comprising a step (40) for checking whether the digest of the last round ($H_N$) matches a reference digest ($H_R$), and for activating a countermeasure (43) if the digest of the last round ($H_N$) does not match said reference digest ($H_R$).

4. The method of claim 3, wherein said countermeasure (43) enables to stop said method before calculating said output data (51).

5. The method of claim 3 or 4, wherein said reference digest ($H_R$) and said initial cryptographic key (K) have a same lifetime.

6. The method of any of claims 3 to 5, wherein said reference digest ($H_R$) is determined in an iterative way (60) through the number (N) of iterations (j) by calculating, at each iteration (j), a digest ($H_j$); the digest of the first iteration ($H_1$) is obtained by applying a hash function on a result of a logical operation using, as operands, a standard round key ($Sk_1$) of a first round of the AES block algorithm and a secret constant (M); and the digests of the next iterations are each obtained by applying said hash function on a concatenation of the previous digest ($H_{j-1}$) and a result of a logical operation using, as operands, a standard round key ($Sk_i$) of the current round of the AES block algorithm and said secret constant (M).

7. The method of claim 6, wherein said secret constant (M) is determined by applying a hash function on the initial cryptographic key (K).

8. The method of any of preceding claims, wherein the pairs of random values ($R1_i$, $R2_i$) are generated before processing said rounds (i).

9. The method of any of preceding claims, wherein each of said random values ($R1_i$, $R2_i$) is one-byte length.

10. The method of any of preceding claims, wherein the hidden subkey ($Sk_i'$) is a result of a logical expression calculated by successively processing, as ordered operands, a pseudo-standard round key ($Sk_i''$) calculated in accordance with the AES block algorithm using the hidden subkey of the previous round ($Sk_{i-1}'$), the second random value of the current round ($R2_i$), the first random value of the next round ($R1_{i+1}$) and the first random value of the current round ($R1_i$).

11. The method of any of preceding claims, wherein the hidden digest ($H_i'$) is obtained by applying a hash function on a value determined from:

    - a logical expression calculated by successively processing, as ordered operands, the hidden subkey ($Sk_i'$), the secret constant (M) and the first random value of the next round ($R1_{i+1}$), and
    - the hidden digest of the previous round ($H_{i-1}'$) if the current round (i) is not the first round.

12. The method of any preceding claims, wherein the hidden state matrix ($S_i'$) is a result of a logical expression calculated by successively processing, as ordered operands, a pseudo-standard state matrix ($S_i''$) calculated in accordance with the AES block algorithm using the hidden state matrix of the previous round ($S_{i-1}'$), the second random value of the previous round ($R2_{i-1}$), the hidden subkey of the current round ($Sk_i'$) and the second random value of the current round ($R2_i$).

13. The method of any of preceding claims, wherein the hidden Sbox (Sbox') has a same format as that of the standard Sbox and said hidden Sbox (Sbox') is obtained by processing each input value (x) of the standard Sbox as follows:

    - calculating a first result by performing a first logical operation using, as operands, the input value (x) of said standard Sbox and the first random value of the current round ($R1_i$);
    - storing said first result as an input value (x') of the hidden Sbox';
    - determining the output value (y) provided by the standard Sbox for said input value (x) of said standard Sbox;
    - calculating a second result by performing a second logical operation using said output value (y) provided by said standard Sbox and the second random value of the current round ($R2_i$) as operands;
    - storing said second result as an output value (y') of the hidden Sbox'.

14. The method of any of preceding claims, wherein said logical expression, operation or function comprise exclusive OR operator(s).

15. A device (1) for implementing the method of any of claims 1 to 14, comprising:

    - at least one memory (2) configured to store at least any data required to ensure the implementation of said method,
    - a random generator (3) configured to generate at least a part of the required random values,
    - a processing unit (4) configured to enable an execution of said method, and
    - a data interface (5) configured to exchange data with at least said processing unit (4).

**Fig. 1**

**Fig. 2**

$H_0=\emptyset$
$Sk_1=K \; ; \; M$
$[M=Hash(K)]$

$H_j=Hash(H_{j-1}||\;Sk_j\oplus M)$ — 60

$j:1\rightarrow N$

$H_R$

K ; P — 10

$R1_i \; ; \; R2_i$
$Sbox'(x \oplus R1_i) = Sbox(x) \oplus R2_i$
$K'= K \oplus R1_1$ — 20

$Sk_0'=K' \; ; \; H_0=\emptyset \; ; \; S_0'=P\oplus K'$ — 30

31 → 1)    $Sk_i''= Sk_{i-1}' \oplus KesSc\,(Sk_{i-1}')$
         $Sk_i' = Sk_i''\oplus R2_i \oplus R1_{i+1} \oplus R1_i$

32 → 2)    $H_i'=Hash(H_{i-1}' || Sk_i' \oplus M \oplus R1_{i+1})$

33 → 3)    $S_i'' = MC(SR(Sbox'(S_{i-1}'))) \oplus R2_{i-1} \oplus Sk_i'$
         $S_i' = (S_i''\oplus R2_i)$

$i:1\rightarrow N$

$(Sk_N') \; ; \; H_N' \; ; \; S_N' \quad [S_N'=AES_k''(P)]$

$H_R$

$H_N' = H_R$ ? — 40    N — 41   → CtM — 43

Y — 42

$C=AES_k''(P) \oplus H_N'$ — 50

1

3

4

2

5

CPU

# Fig. 3

Europäisches
Patentamt

European
Patent Office

Office européen
des brevets

# EUROPEAN SEARCH REPORT

**Application Number**

EP 17 20 1150

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2012/146550 A1 (CASSIDIAN SAS [FR]; THUILLET CELINE [FR]; FRANCQ JULIEN [FR]) 1 November 2012 (2012-11-01) * abstract * * page 3, line 3 - page 5, line 31 * * page 10, line 11 - page 13, line 11; figure 3 * ----- | 1-15 | INV. H04L9/06 H04L9/00 |
| A | CHRISTOPHE CLAVIER ET AL: "Passive and Active Combined Attacks on AES Combining Fault Attacks and Side Channel Analysis", FAULT DIAGNOSIS AND TOLERANCE IN CRYPTOGRAPHY (FDTC), 2010 WORKSHOP ON, IEEE, PISCATAWAY, NJ, USA, 21 August 2010 (2010-08-21), pages 10-19, XP031757066, ISBN: 978-1-4244-7844-6 * page 13, left-hand column, line 32 - page 15, left-hand column, line 33; figures 1,2 * * page 15, right-hand column, line 34 - line 42 * ----- | 1-15 | |

**TECHNICAL FIELDS SEARCHED (IPC)**

H04L

The present search report has been drawn up for all claims

| Place of search | Date of completion of the search | Examiner |
|---|---|---|
| Munich | 4 May 2018 | Spranger, Stephanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 20 1150

This annex lists the patent family members relating to the patent documents cited in the above-mentioned European search report.
The members are as contained in the European Patent Office EDP file on
The European Patent Office is in no way liable for these particulars which are merely given for the purpose of information.

04-05-2018

| Patent document cited in search report | Publication date | Patent family member(s) | Publication date |
|---|---|---|---|
| WO 2012146550 A1 | 01-11-2012 | EP 2702720 A1<br>FR 2974693 A1<br>WO 2012146550 A1 | 05-03-2014<br>02-11-2012<br>01-11-2012 |

EPO FORM P0459

For more details about this annex : see Official Journal of the European Patent Office, No. 12/82